(19) **Europäisches Patentamt European Patent Office Office européen des brevets**

(11) **EP 4 386 425 B1**

(12) **FASCICULE DE BREVET EUROPEEN**

(45) Date de publication et mention de la délivrance du brevet:
**25.06.2025 Bulletin 2025/26**

(21) Numéro de dépôt: **23216769.2**

(22) Date de dépôt: **14.12.2023**

(51) Classification Internationale des Brevets (IPC):
*G01S 7/00* (2006.01)    *G06T 7/277* (2017.01)
*G05D 1/246* (2024.01)    *G01S 13/08* (2006.01)
*G01S 13/88* (2006.01)    *G01S 13/89* (2006.01)
*G01S 15/89* (2006.01)    *G01S 15/931* (2020.01)
*G01S 17/931* (2020.01)    *G01S 13/931* (2020.01)
*G05D 109/10* (2024.01)

(52) Classification Coopérative des Brevets (CPC):
**G01S 13/08; G01S 13/881; G01S 13/931;**
**G01S 15/931; G01S 17/931; G05D 1/2464;**
G01S 13/89; G01S 15/89; G01S 2013/9323;
G01S 2013/9324; G05D 2109/10

(54) **PROCÉDÉ DE CARACTÉRISATION DE L'ENVIRONNEMENT D'UN DISPOSITIF MOBILE, PRODUISANT UNE GRILLE D'ESPACE STATIQUE ET/OU UNE GRILLE D'ESPACE LIBRE**

VERFAHREN ZUR CHARAKTERISIERUNG DER UMGEBUNG EINER MOBILEN VORRICHTUNG, DIE EIN STATISCHES RAUMGITTER UND/ODER EIN FREIRAUMGITTER ERZEUGT

METHOD FOR CHARACTERIZING THE ENVIRONMENT OF A MOBILE DEVICE, PRODUCING A GRID OF STATIC SPACE AND/OR A GRID OF FREE SPACE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **16.12.2022 FR 2213671**

(43) Date de publication de la demande:
**19.06.2024 Bulletin 2024/25**

(73) Titulaire: **Commissariat à l'Energie Atomique et aux Energies Alternatives**
**75015 Paris (FR)**

(72) Inventeur: **RAKOTOVAO ANDRIAMAHEFA, Tiana**
**38054 Grenoble Cedex 09 (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**US-A1- 2021 131 823**

• C. COUE ET AL: "Bayesian Occupancy Filtering for Multitarget Tracking: An Automotive Application", THE INTERNATIONAL JOURNAL OF ROBOTICS RESEARCH, vol. 25, no. 1, 1 January 2006 (2006-01-01), pages 19 - 30, XP055184349, ISSN: 0278-3649, DOI: 10.1177/0278364906061158

## Description

## Domaine technique

L'invention se rapporte à un procédé permettant de caractériser l'environnement d'un dispositif mobile (également appelé robot par la suite) à l'aide de capteurs de distance. Elle concerne également un dispositif pour la mise en œuvre d'un tel procédé.

L'invention peut être appliquée à tout type de robots, par exemple des robots terrestres (voitures autonomes), robots aériens (drones), robots sous-marins, etc.

Un robot mobile navigue dans l'espace pour effectuer une tâche. Pour naviguer de manière autonome, le robot doit acquérir des connaissances sur son environnement afin de planifier un chemin, éviter les collisions et naviguer en toute sécurité. Le robot s'appuie à cet effet sur un système de perception.

Le système de perception récupère des données sur l'environnement grâce à des mesures à partir de capteurs embarqués. Un modèle informatique de l'environnement est ensuite construit et mis à jour en continu par le système de perception basé sur des mesures de capteurs. Le robot raisonnera et prendra des décisions de navigation basées sur le modèle d'environnement.

Plusieurs types de modèles d'environnement existent dans l'état de l'art. L'un des plus couramment utilisés en robotique est la grille d'occupation initialement introduite dans l'article de H.P. Moravec et A. Elfes « High resolution maps from wide angle sonar », Proceedings. IEEE ICRA, volume 2, pages 116-121, Mar 1985. La grille d'occupation est une grille de probabilités : chaque cellule a une probabilité d'occupation, donc une valeur comprise entre 0 et 1.

Une grille d'occupation est une carte d'une région délimitée de l'environnement entourant le robot. La région est subdivisée en plusieurs sous-régions adjacentes appelées cellules.

Une cellule peut avoir trois dimensions (3D), par exemple, un cube de 10 cm $\times$ 10 cm $\times$ 10 cm. Il peut également être en deux dimensions (2D), par exemple, l'espace délimité par un carré de 10 cm $\times$ 10 cm. La collection de toutes les cellules forme une grille.

L'objectif du cadre défini par la grille d'occupation est de calculer la probabilité qu'une cellule soit occupée par un obstacle compte tenu des mesures des capteurs embarqués. Une probabilité d'occupation de 1 signifie « la cellule est occupée », 0 signifie « la cellule est libre », et une valeur comprise entre 0 et 1 exprime l'incertitude sur l'occupation de la cellule. En particulier, une probabilité d'occupation de 1/2 signifie que l'occupation de la cellule est inconnue, c'est-à-dire que la cellule peut être libre ou occupée, sans pencher pour une des deux hypothèses.

Les grilles d'occupation présentent des propriétés avantageuses pour un système de perception. Ils constituent une méthode robuste pour fusionner plusieurs capteurs de différentes technologies. La demande de brevet FR3041451 fournit un exemple de procédé de fusion multi-capteurs mettant en œuvre des calculs en arithmétique entière.

Les technologies de détection couramment utilisées sont les LIDAR, les RADAR, les caméras et les SONAR. Alors que les caméras donnent des couleurs et des textures détaillées, elles sont limitées dans l'obscurité. Les LIDAR peuvent donner une représentation détaillée de nuages de points, mais leurs performances diminuent en cas de mauvais temps (neige, brouillard ou pluie).

La fusion multi-capteurs est pour cela essentielle pour surmonter la limitation d'une technologie donnée. Les grilles d'occupation permettent également de gérer les incertitudes de mesure et les bruits par des approches probabilistes.

Les grilles de caractéristiques représentent ainsi l'espace libre et l'espace occupé par un ou plusieurs corps matériels. On appelle « corps matériels » (ou obstacle) toute substance ou objet matériel présentant une individualité et pouvant être détecté et identifié par un capteur approprié.

Ainsi, sont considérés des corps matériels les objets inanimés, qu'ils soient naturels ou artificiels, les végétaux, les animaux, les êtres humains, mais aussi des particules liquides ou solides en suspension dans l'air, comme les nuages, voire des masses liquides ou gazeuses.

Par exemple, pour une voiture autonome, les corps matériels courants sont les piétons, les autres voitures, les bâtiments, la végétation, les cyclistes, etc. Les corps matériels peuvent être mobiles, c'est-à-dire dynamiques ou statiques. L'état d'occupation d'une cellule peut varier dans le temps. En effet, une cellule peut être libre pendant un certain temps, puis subitement occupée par un obstacle mobile, puis à nouveau libre lorsque l'obstacle est parti. Par exemple, un piéton peut se lever sans bouger pendant une courte période, puis marcher dans une direction.

Le cadre standard des grilles de caractéristiques calcule les probabilités d'occupation de toutes les cellules d'une grille à chaque itération t, en ne prenant en compte que les mesures instantanées des capteurs à la même itération. Soit $OG_t$ la grille de caractéristiques construite à l'itération t (ou instant t). Considérons une cellule c qui a toujours été estimée libre par toutes les grilles de caractéristiques de $OG_1$ à $OG_{t-1}$.

A l'itération t, supposons que la cellule est temporairement occultée des capteurs par un obstacle mobile. L'occlusion fait que l'état d'occupation de la cellule c passe soudainement de libre à inconnu à l'itération t. Cela signifie que les estimations précédentes ont été brusquement oubliées même s'il est possible que la cellule c reste libre à l'itération t alors qu'elle est temporairement occluse.

Le même effet apparaît pour les cellules statiques, c'est-à-dire les cellules occupées par des obstacles fixes. Ces cellules sont estimées occupées tant qu'elles sont présentes dans le champ de vision des capteurs. Mais, leur état d'occupation devient subitement inconnu dès qu'ils sont obstrués par un obstacle, même en mouvement. Cependant, comme elles sont occupées par un corps matériel statique (un obstacle), il est possible que ces cellules restent occupées pendant l'occlusion.

Plusieurs approches existent dans l'état de l'art pour tenir compte de l'historique des mesures afin d'estimer les cellules libres et les cellules occupées par un corps matériel statique.

Les approches les plus prometteuses consistent à utiliser des filtres à particules afin de séparer les cellules occupées par des obstacles dynamiques des cellules occupées par des obstacles statiques.

Les filtres à particules sont décrit par exemple dans l'article de Nuss, D., Reuter, S., Thom, M., Yuan, T., Krehl, G., Maile, M., Dietmayer, K. (2018) « A random finite set approach for dynamic occupancy grid maps with real-time application », The International Journal of Robotics Research, 37(8), 841-866. La définition d'une particule dans ces algorithmes peut différer mais en général, les particules sont un ensemble de points répartis dans l'espace. Les particules ont des coordonnées de position et un vecteur de vitesse.

Une particule a également un poids utilisé pour estimer les distributions de vitesse. Entre les itérations successives, une particule se déplace en suivant sa vitesse (modulo l'introduction d'une erreur aléatoire).

L'idée de base de ces algorithmes est de répandre au hasard des particules dans l'espace de sorte que leur mouvement suive le mouvement des corps matériels dynamiques. Les particules sont distribuées au sein de la grille de sorte qu'un grand nombre de particules sont présentes dans les cellules occupées par des corps matériels dynamiques.

Ces approches estiment à la fois où sont les cellules libres, où sont les statiques et où sont les dynamiques, aboutissant à une solution avec une forte demande de calcul. Par conséquent, ces approches nécessitent un matériel informatique à hautes performances de calcul tels que les GPU (« Graphics Processing Unit » ou processeur graphique) pour atteindre une exécution en temps réel, ce qui constitue un frein à leur intégration dans du matériel embarqué ayant des performances de calcul plus limitées et une consommation d'énergie plus faible, tels que les microcontrôleurs.

Le document US 2012/131823 A1 décrit un procédé de cartographie de l'environnement d'un véhicule. Le document « Bayesian Occupancy Filtering for Multitarget Tracking: an Automotive Application » (Coue et al.) décrit une application du filtre Bayésien d'occupation pour de la perception robuste et de l'évaluation de danger.

L'invention vise donc à fournir un procédé qui tient compte de l'historique des mesures afin d'estimer les cellules libres et les cellules occupées par un corps matériel statique, et qui puisse être intégré dans du matériel embarqué du type microcontrôleur.

## Résumé de l'invention

Un objet de l'invention est donc un procédé de caractérisation de l'environnement d'un dispositif mobile, dans lequel, pour chaque itération à un instant t, les étapes suivantes sont mises en œuvre :

**S10) Acquisition** d'une pluralité de mesures de distance dans l'environnement par au moins un capteur ;

S20) Génération d'une paire de grilles d'occupation à l'instant t - 1 et à l'instant , chaque grille fusionnant les mesures de distance dans une représentation spatiale discrétisée de l'environnement ;

S30) Génération d'une grille d'espace statique à l'instant, chaque cellule de la grille d'espace statique à l'instant t ayant une probabilité postérieure que ladite cellule soit occupée par un corps matériel statique à l'instant t, ladite probabilité postérieure étant calculée pour chaque cellule par un filtre bayésien binaire à partir :

de la probabilité postérieure que ladite cellule soit occupée par un corps matériel statique à l'instant t - 1, ladite probabilité postérieure que ladite cellule soit occupée par un corps matériel statique à l'instant t - 1 étant directement injectée en entrée du filtre bayésien binaire ;

d'un modèle de prédiction dit statique comprenant une probabilité que la cellule soit occupée par un corps matériel statique à l'instant t en fonction de l'état de la cellule à l'instant t - 1 ; et

d'un modèle inverse dit statique à l'instant t qui comprend une probabilité de connaissance de l'occupation de la cellule par un corps matériel statique à l'instant t à partir de la paire de grilles d'occupation à l'instant $t$ - 1 et à l'instant $t$ ;

ou

S40) Génération d'une grille d'espace libre à l'instant , chaque cellule de la grille d'espace libre à l'instant t ayant une probabilité postérieure que ladite cellule soit libre à l'instant t, ladite probabilité postérieure étant calculée pour chaque cellule par un filtre bayésien binaire à partir :

de la probabilité postérieure que ladite cellule soit libre à l'instant t - 1, ladite probabilité postérieure que ladite cellule soit libre à l'instant t - 1 étant directement injectée en entrée du filtre bayésien binaire ;

d'un modèle de prédiction dit libre comprenant une probabilité que la cellule soit libre à l'instant *t* en fonction de l'état de la cellule à l'instant *t* - 1 ; et

d'un modèle inverse dit libre à l'instant t qui comprend une probabilité de connaissance du fait que la cellule soit libre à l'instant t à partir de la paire de grilles d'occupation à l'instant *t* - 1 et à l'instant *t*.

Avantageusement, l'étape S30) de génération d'une grille d'espace statique et l'étape S40) de génération d'une grille d'espace libre sont mises en œuvre de façon concomitante.

Avantageusement, le procédé comprend une étape S50) de génération d'une grille combinée résultant de la combinaison de la grille d'espace statique et de la grille d'espace libre.

Avantageusement, chaque cellule i de la grille combinée est calculée par la fusion bayésienne suivante :

$$CG_t(i) \triangleq F(SG_t(i), 1 - FG_t(i))$$

Dans lequel F(,) est la fonction de fusion bayésienne, $CG_t(i)$ correspond à une cellule i de la grille combinée à l'instant *t*, $SG_t(i)$ correspond à une cellule i de la grille d'espace statique à l'instant *t*, et $FG_t(i)$ correspond à une cellule i de la grille d'espace libre à l'instant t,

Et selon la valeur de $CG_t(i)$ :

si $CG_t(i) > 1/2$, la cellule i est probablement statique compte tenu de la séquence de paires de grilles d'occupation
si $CG_t(i) < 1/2$, la cellule est probablement libre,
si $CG_t(i) = 1/2$, la cellule n'est ni libre ni statique.

Avantageusement :

- la probabilité postérieure que la cellule soit occupée par un corps matériel statique à l'instant *t* et le modèle inverse statique à l'instant *t* sont approximés par des valeurs appartenant à un ensemble de cardinalité finie, les valeurs étant identifiées respectivement par un indice de probabilité n($s_t|w_{1:t}$) et par un indice de modèle inverse statique n($s_t|w_t$);
- la probabilité postérieure que la cellule soit libre à l'instant t et le modèle inverse libre à l'instant t sont approximés par des valeurs appartenant à un ensemble de cardinalité finie, les valeurs étant identifiées respectivement par un indice de probabilité n($f_t|w_{1:t}$) et par un indice de modèle inverse libre n(ftlwt).

Avantageusement, l'indice de modèle inverse statique n($s_t|w_t$) est calculé de la façon suivante :

$$n(s_t|w_t) = \begin{cases} g(w_t) > 0 & si \ n(o_{i,t-1}|z_{t-1}) > 0 \ et \ n(o_{i,t}|z_t) > 0 \\ 0 & sinon \end{cases}$$

La fonction $g(w_t)$ renvoyant une valeur positive, $n(o_{i,t-1}|z_{t-1})$ correspondant à l'indice d'occupation de la cellule i de la grille d'occupation $OG_{t-1}$ à l'instant *t* - 1, et $n(o_{i,t}|z_t)$ correspondant à l'indice d'occupation de la cellule i de la grille d'occupation $OG_t$ à l'instant *t*.

Avantageusement, l'indice de modèle inverse libre n($f_t|w_t$) est calculé de la façon suivante :

$$n(f_t|w_t) = \begin{cases} h(w_t) > 0 & si \ n(o_{i,t}|z_t) < 0 \\ 0 & sinon \end{cases}$$

et $n(o_{i,t}|z_t)$ correspondant à l'indice d'occupation de la cellule i de la grille d'occupation $OG_t$ à l'instant *t*, la fonction $h(w_t)$ renvoyant une valeur positive.

Avantageusement la valeur positive de la fonction g(wt) et la valeur positive de la fonction h(wt) sont des valeurs constantes.

Avantageusement, la valeur positive renvoyée par la fonction g(wt) est égale à $max(n(o_{i,t-1}|z_{t-1}), n(o_{i,t}|z_t))$.

Avantageusement la valeur positive renvoyée par la fonction $h(w_t)$ est égale à - n($o_{i,t}|z_t$).

Avantageusement, l'indice de modèle inverse libre n($f_t|w_t$) est calculé de la façon suivante :

$$n(f_t|w_t) = \begin{cases} \max\left(-n(o_{i,t-1}|z_{t-1}), -n(o_{i,t}|z_t)\right) & \text{si } n(o_{i,t-1}|z_{t-1}) < 0 \\ -n(o_{i,t}|z_t) \ sinon \end{cases}$$

Avantageusement, l'indice $n(s_t|w_{1:t-1})$ correspondant à la composante de prédiction du filtre bayésien binaire de la grille d'espace statique est obtenu à l'aide d'une table de consultation comprenant un ensemble fini d'indices de probabilités, et l'indice filtré $n(s_t|w_{1:t})$ est obtenu par addition d'indices entiers de probabilités, et dans lequel l'indice $n(f_t|w_{1:t-1})$ correspondant à la composante de prédiction du filtre bayésien binaire de la grille d'espace libre est obtenu à l'aide d'une table de consultation comprenant un ensemble fini d'indices de probabilités, et l'indice filtré $n(f_t|w_{1:t})$ est obtenu par addition d'indices entiers de probabilités.

Avantageusement, chaque cellule i de la grille combinée *(CGt)* est calculée par la fusion bayésienne suivante :

$$CG_t(i) \triangleq SG_t(i), 1 - FG_t(i)$$

$CG_t(i)$ correspond à une cellule *i* de la grille combinée à l'instant *t*, $SG_t(i)$ correspond à une cellule i de la grille d'espace statique à l'instant *t*, et $FG_t(i)$ correspond à une cellule *i* de la grille d'espace libre à l'instant *t*,

Et selon la valeur de *CGt(i)* :

si *CGt(i)* > 0 la cellule i est probablement statique compte tenu de la séquence de paires de grilles d'occupation $(w_{1:t})$
si $CG_t(i)$ < 0, la cellule est probablement libre,
si $CG_t(i)$ = 0, la cellule n'est ni libre ni statique.

L'invention se rapporte aussi à un procédé d'évitement d'un corps matériel en mouvement autour d'un corps mobile, caractérisé en ce qu'il met en œuvre le procédé précité pour caractériser l'environnement d'un dispositif mobile, et qu'il envoie une commande à un actionneur du dispositif mobile afin d'éviter ledit corps matériel.

L'invention se rapporte aussi à un dispositif de caractérisation de l'environnement d'un dispositif mobile, comprenant:

- au moins un port d'entrée pour recevoir une pluralité de signaux représentatifs d'une série temporelle de mesures de distance issues d'un ou plusieurs capteurs de distance, et
- un processeur de données configuré pour recevoir en entrée lesdits signaux, pour générer une grille d'espace libre ou une grille d'espace statique à partir desdits signaux en appliquant le procédé précité.

**Description des figures**

D'autres caractéristiques, détails et avantages de l'invention ressortiront à la lecture de la description faite en référence aux dessins annexés donnés à titre d'exemple.

La figure 1 est un schéma-bloc illustrant les différentes étapes du procédé selon l'invention.

La figure 2 est un schéma illustrant le filtre bayésien binaire.

La figure 3 est un schéma illustrant le filtre bayésien binaire entier.

La figure 4 est un schéma illustrant le filtre bayésien binaire entier dans lequel le modèle de prédiction est constant.

La figure 5 est un schéma illustrant le procédé de caractérisation de l'environnement selon l'invention par génération d'une grille d'espace statique.

La figure 6 est un schéma illustrant le procédé de caractérisation de l'environnement selon l'invention par génération d'une grille d'espace libre.

La figure 7 est un schéma illustrant le procédé de caractérisation de l'environnement selon l'invention par génération d'une grille combinée.

La figure 8 est un schéma illustrant la façon dont le procédé selon l'invention se distingue d'un algorithme d'estimation du déplacement d'un corps matériel connu de l'homme du métier.

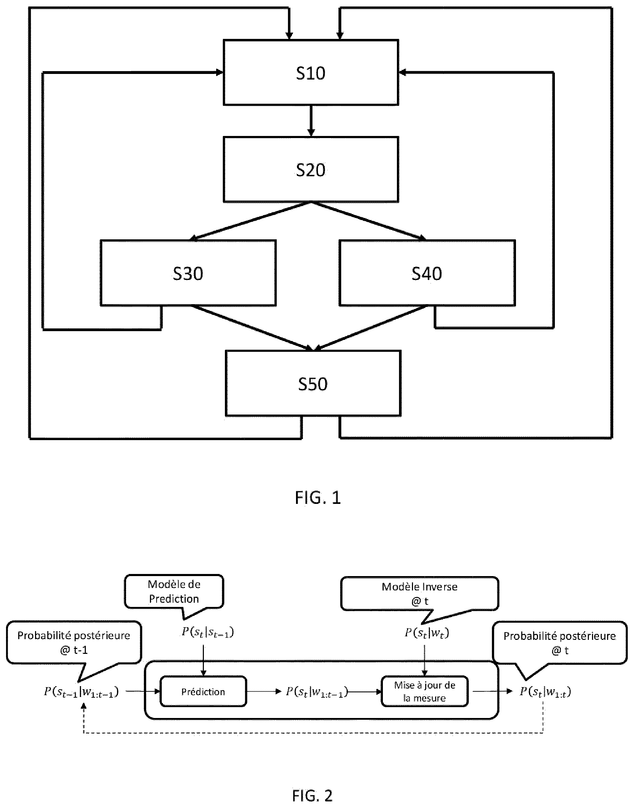

Les différentes étapes du procédé selon l'invention sont illustrées sur la figure 1.

### Acquisition des mesures de distance

Le procédé fonctionne de façon itérative : à chaque itération correspondant à un instant t, on effectue une nouvelle série de mesures (étape S10). Le fait d'effectuer les mêmes calculs avec des mesures issues de plusieurs capteurs ne pose aucune difficulté pour l'homme du métier.

L'ensemble de mesures zt issue d'un ou plusieurs capteurs à l'instant t permet de déterminer la probabilité d'occupation d'une cellule i parmi les $N_C$ cellules d'une grille d'occupation telle que décrite précédemment. Ainsi, chaque cellule est identifiée par un indice i allant de 1 à $N_C$.

La référence zt désigne en fait un ensemble de mesures lorsque le système est composé de plusieurs capteurs ou lorsqu'un capteur produit plusieurs mesures à chaque itération. Par exemple, un balayage LIDAR produit un nuage de points composé d'un nombre fini de points.

### Génération de la paire de grilles d'occupation

La deuxième étape S20 consiste à générer une paire wt de grilles d'occupation. A chaque instant t, une grille d'occupation $OG_t$ fusionne les mesures produites par tous les capteurs du système à la même itération.

Il est rappelé que pour une grille d'occupation $OG_t$, une cellule a un état binaire : elle est occupée par un obstacle ou non. Dans le cadre des grilles d'occupation, il est communément supposé que « non occupé » signifie « libre ».

A chaque instant t, on calcule ainsi la probabilité qu'une cellule soit occupée en prenant en compte toutes les mesures de capteurs produites au même instant t. $P(o_{i,t}|z_t)$ représente la probabilité d'occupation d'une cellule i compte tenu des mesures zt.

Ainsi, une nouvelle grille d'occupation OGt est générée l'instant t, et la grille d'occupation $OG_{t-1}$, générée l'instant t - 1, est stockée en mémoire afin d'être réutilisée pour la paire wt de grilles d'occupation. $w_{1:t}$ désigne la séquence ($w_1$, ..., wt) dans la présente demande.

### Génération de la grille d'espace statique

Dans une troisième étape S30, une grille d'espace statique SGt est générée à l'instant t. La grille d'espace statique SGt est un réseau de $N_C$ éléments, dans lequel :

$$\forall i \in \{1, \dots, N_c\}, \ SG_t(i) = P(s_t|w_{1:t})$$

Chaque cellule SGt(i) de la grille d'espace statique a une probabilité postérieure que, à l'instant t, la cellule soit occupée par un corps matériel statique $P(s_t|w_{1:t})$ compte tenu de la séquence de paires de grilles d'occupation $w_{1:t}$.

Ladite probabilité postérieure $P(S_t|w_{1:t})$ est calculée pour chaque cellule de la grille d'espace statique SGt par un filtre bayésien binaire, dont le principe est rappelé en figure 2.

Le filtrage bayésien binaire consiste à estimer de façon récursive un état caché (ce qui est le cas si certaines cellules sont obstruées par un obstacle, de sorte que la mesure de distance soit inconnue) au vu d'observations.

$P(S_t|z_{1:t})$ est appelée probabilité postérieure, car elle dépend de la valeur spécifique des observations $z_{1:t}$. Comme l'illustre la figure 2, la probabilité postérieure est réinjectée en entrée du filtre pour l'itération suivante.

Le filtre bayésien binaire comprend essentiellement deux étapes, à savoir une étape de prédiction, qui dépend de l'état des paires aux instants antérieurs 1:t - 1 (probabilité postérieure à l'instant t - 1, et modèle de prédiction à l'instant t) et une étape de mise à jour de la mesure, qui prend en compte le modèle inverse à l'instant t et la sortie de la prédiction.

On peut considérer, de façon avantageuse, que le modèle de prédiction statique (probabilité que la cellule soit occupée par un corps matériel statique à l'instant *t* en fonction de l'état de la cellule à l'instant *t* - 1) est égal à une valeur constante $\alpha$.

Avec cette hypothèse, l'équation de prédiction peut s'écrire :

$$P(s_t|w_{1:t-1}) = P(s_{t-1}|w_{1:t-1}) \cdot \alpha + \left(1 - P(s_{t-1}|w_{1:t-1})\right) \cdot (1 - \alpha)$$

Ainsi, la valeur de $\alpha$ influe la prédiction de la façon suivante :
Si $\alpha = 1$, le résultat de la prédiction est $P(s_t|w_{1:t-1}) = P(s_t|w_{1:t-1})$, ce qui signifie que $s_t$ garde la même valeur que l'estimation précédente de $s_{t-1}$.

Si $\alpha = \frac{1}{2}$, le résultat de la prédiction est $P(s_t|w_{1:t-1}) = \frac{1}{2}$, ce qui signifie que la prédiction de $s_t$ à partir de $s_{t-1}$ résulte d'une estimation complètement incertaine de $s_t$.

Une valeur de $\alpha$ comprise entre ½ et 1 exprime le degré d'incertitude entre les cas de figures précédents.

Dans le cadre de la présente invention, le modèle inverse à l'instant t est un modèle inverse dit statique $P(s_t|w_t)$ qui comprend une probabilité de connaissance de l'occupation de la cellule par un corps matériel à l'instant t - 1 et à l'instant t à partir de la paire de grilles d'occupation à l'instant t - 1 et à l'instant t. L'homme du métier peut se référer à la définition détaillée du modèle inverse dans la demande de brevet FR3041451.

A chaque instant t, le modèle inverse statique est calculé à partir de la paire wt de grilles d'occupation. Le fait d'utiliser un filtre bayésien binaire avec un modèle inverse comprenant les dernières deux grilles d'occupation (à l'instant t - 1 et à l'instant t) permet ainsi de déterminer, pour chaque cellule, si celle-ci est occupée par un corps matériel statique. Cette façon d'opérer diffère du procédé divulgué dans la demande de brevet FR3116640, qui estime le mouvement d'un corps matériel en utilisant un modèle inverse qui ne dépend que d'une seule série d'observations temporelles à un instant t. Dans la demande de brevet FR3116640, le mouvement est estimé en faisant appel à une grille d'incohérence, générée en réponse à une détection, entre deux itérations, d'un changement d'état d'occupation dans les grilles de caractéristiques.

Comme l'illustre la figure 2, la probabilité postérieure $P(s_{t-1}|w_{1:t-1})$ que la cellule soit occupée par un corps matériel statique à l'instant t - 1 est directement injectée en entrée du filtre bayésien binaire, ce qui simplifie considérablement le procédé divulgué dans la demande de brevet FR3116640. En effet, dans ce document, le procédé itératif d'estimation du mouvement d'un corps matériel met en œuvre une étape de propagation des indices de probabilités avant que ceux-ci ne soient réinjectés en entrée du filtre.

Ainsi, le procédé selon l'invention permet de caractériser les cellules occupées par des obstacles statiques, dans l'environnement d'un dispositif mobile, avec une complexité calculatoire inférieure par rapport aux procédés connus.

## Génération de la grille d'espace libre

Dans une étape S40, le même principe peut être appliqué pour générer une grille d'espace libre FGt à l'instant t.

Ainsi, chaque cellule FGt(i) de la grille d'espace libre à l'instant t a une probabilité postérieure $P(f_t|w_{1:t})$ que la cellule soit libre à l'instant t. La probabilité postérieure est calculée pour chaque cellule par un filtre bayésien binaire à partir :

- de la probabilité postérieure que ladite cellule soit libre à l'instant -1 ($P(f_{t-1}|w_{1:t-1})$), ladite probabilité postérieure que ladite cellule soit libre à l'instant t - 1 ($P(f_{t-1}|w_{1:t-1})$) étant directement injectée en entrée du filtre bayésien binaire ;

- d'un modèle de prédiction dit libre comprenant une probabilité que la cellule soit libre à l'instant t en fonction de l'état de la cellule à l'instant t - 1 ($P(f_t|f_{t-1})$) ; et

- d'un modèle inverse dit statique à l'instant t ($P(ftlwt)$) qui comprend une probabilité de connaissance du fait que la cellule soit libre à l'instant t - 1 et à l'instant t à partir de la paire de grilles d'occupation à l'instant t - 1 et à l'instant t.

Ainsi, le procédé selon l'invention permet de caractériser les cellules libres, dans l'environnement d'un dispositif mobile, également avec une complexité calculatoire inférieure par rapport aux procédés connus.

Selon un mode de réalisation, le procédé selon l'invention comprend uniquement la génération d'une grille d'espace statique (c'est-à-dire sans la génération d'une grille d'espace libre), ou, inversement uniquement la génération d'une grille d'espace libre (c'est-à-dire sans la génération d'une grille d'espace statique). En effet, les deux grilles sont indépendantes, et le procédé peut itérer en boucle les étapes S10-S20-S30, ou les étapes S10-S20-S40.

## Génération de la grille combinée

En variante, la grille d'espace statique et la grille d'espace libre sont mises en œuvre de façon concomitante. Ainsi, à chaque itération, une grille d'espace statique SGt et une grille d'espace libre FGt sont générées, à partir des mêmes mesures de distance, avec les mêmes paires wt de grilles d'occupation.

Avantageusement, à chaque itération, la grille d'espace statique SGt et la grille d'espace libre FGt sont combinées entre elles (combinaison cellule par cellule), de façon à obtenir une grille combinée $CG_t$ (étape S50, figure 1).

Chaque cellule i de la grille combinée $CG_t$ peut être calculée par la fusion bayésienne suivante :

$$CG_t(i) \triangleq F(SG_t(i), 1 - FG_t(i))$$

*F(,)* représente la fonction de fusion bayésienne.

Ainsi, selon le signe de CGt(i) :

si CGt(i) > 1/2, la cellule i est probablement statique compte tenu de la séquence de paires de grilles d'occupation $w_{1:t}$

si CGt(i) < 1/2, la cellule est probablement libre,

si CGt(i) = 1/2, la cellule n'est ni libre ni statique.

Ainsi, on regarde l'estimation qui « l'emporte » entre l'estimation de la grille d'espace statique SGt et l'estimation de la grille d'espace libre FGt.

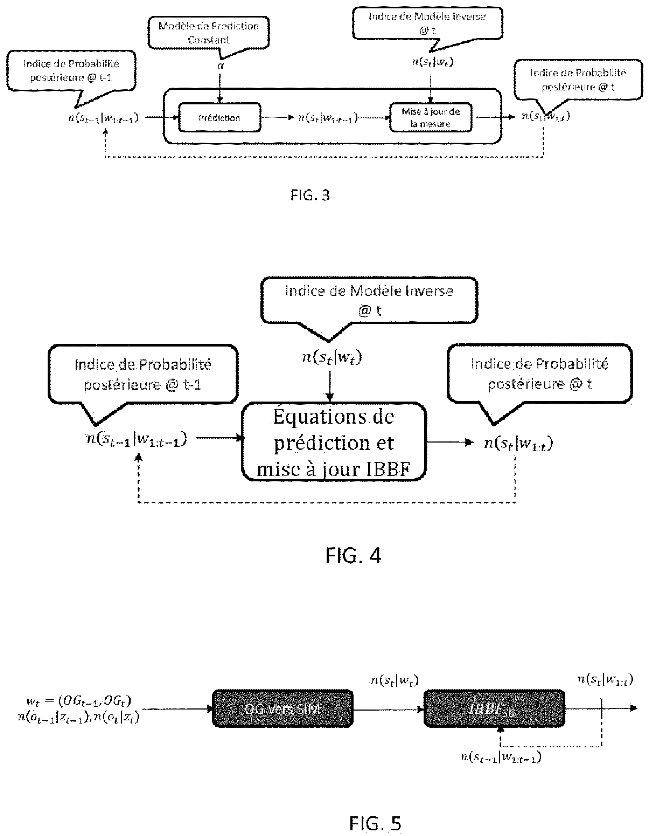

Le procédé ainsi décrit utilise le modèle du filtre bayésien binaire. Une façon d'améliorer l'implémentation et l'intégration du procédé dans un microprocesseur serait d'appliquer un filtre bayésien binaire entier, comme l'illustre la figure 3. Le cas où le modèle de prédiction statique est égal à une valeur constante $\alpha$ est illustré par la figure 4.

Pour cela, on identifie la probabilité postérieure $P(s_t|w_{1:t})$ que la cellule soit occupée par un corps matériel statique à l'instant t par un indice de probabilité $n(s_t|w_{1:t})$. La probabilité postérieure $P(s_{t-1}|w_{1:t-1})$ que la cellule soit occupée par un corps matériel statique à l'instant t - 1 est identifiée par un indice de probabilité $n(s_{t-1}|w_{1:t-1})$. De même, le modèle inverse statique $P(st|wt)$ à l'instant t est identifié par un indice de modèle inverse statique $n(st|wt)$. De plus, Il est considéré que le modèle de prédiction statique a une valeur constante $\alpha$ au cours du temps.

Ces indices appartiennent à un ensemble de cardinalité finie de classes de probabilité, et les étapes de prédiction et de mise à jour tirent profit de la fonction de fusion entière pour la fonction de filtrage, en utilisant uniquement une arithmétique entière, telle que décrite dans la demande de brevet FR3116640. En effet, l'ensemble de cardinalité finie de classes de probabilité est formé par l'union d'un ou plusieurs sous-ensembles tels que, lors de l'étape de mise à jour de la mesure, une fusion de deux classes de probabilité appartenant à un même sous-ensemble fournisse un résultat appartenant aussi audit sous-ensemble.

L'indice $n(s_t|w_{1:t-1})$ correspondant à la composante de prédiction du filtre bayésien binaire entier de la grille d'espace statique est obtenu à l'aide d'une table de consultation comprenant un ensemble fini d'indices de probabilités, et l'indice filtré $n(s_t|w_{1:t})$ est obtenu par addition d'indices entiers de probabilités.

**Algorithme du filtre bayésien binaire entier de la grille d'espace statique** $SG_t$

Le filtre bayésien binaire entier *IBBF_{SG}* de la grille d'espace statique *SG_t* est un algorithme comprenant une fonction d'initialisation du filtre, et une fonction d'application itérative du filtre, avec rebouclage direct depuis la sortie du filtre. L'étape de prédiction, dans la fonction d'initialisation du filtre, est calculée par une table de consultation, et la mise à jour de mesure est calculée par une somme d'indices entiers, comme indiqué ci-dessous.

La fonction d'initialisation dépend des paramètres d'entrée suivants : $\varepsilon_{GFSE}$, $\Gamma_{GFSE}$ et $\alpha_{SG}$

$\varepsilon_{GFSE}$ est une constante qui correspond au paramètre d'approximation de la séquence $(q_n)_{n\in\Gamma_{GFSE}}$ de nombres réels entre 0 et 1 utilisés dans la fonction de fusion bayésienne entière, dont les paramètres x et y sont des valeurs de probabilités, et définie ainsi :

$$F(x, y) = \frac{x \cdot y}{x \cdot y + (1-x) \cdot (1-y)}$$

$$(q_n)_{n\in\mathbb{Z}} = \begin{cases} \frac{1}{2} & si\ n = 0 \\ \frac{1}{2} + \epsilon_{GFSE} & si\ n = 1 \\ \frac{1}{2} - \epsilon_{GFSE} & si\ n = -1 \\ F(q_{n-1}, q_1) & si\ n > 1 \\ F(q_{n-1}, q_{-1}) & si\ n < -1 \end{cases}$$

L'ensemble d'indices $\Gamma_{GFSE}$ est un sous-ensemble de $\mathbb{Z}$ permettant de définir la séquence $(q_n)_{n\in\Gamma_{GFSE}}$. Ainsi, au

lieu de travailler sur une séquence infinie $(q_n)_{n \in \mathbb{Z}}$, on travaille uniquement dans une séquence finie $(q_n)_{n \in \Gamma GFSE}$. Par exemple, pour décoder les indices *n* en 8 bits seulement, on prend $\Gamma_{GFSE}$ = {-128, ...,127}.

$\alpha_{SG}$ est une constante pour la fonction d'initialisation, avec $\frac{1}{2} \leq \alpha_{SG} \leq 1$, et qui correspond à la valeur numérique du modèle de prédiction statique $P(s_t|s_{t-1})$.

La première étape de la fonction d'initialisation consiste à déterminer chaque entrée de la table de consultation *predLUT* en partant par un vecteur vide de la taille de $\Gamma_{GFSE}$, puis, pour chaque *n* dans $\Gamma_{GFSE}$, l'élément *predLUT(n)* est un indice de probabilité calculé de la manière suivante : *predLUT(n) = m* où $approx_{policy}(q_n \cdot \alpha_{SG} + (1 - q_n) \cdot (1 - \alpha_{SG})) = q_m$.

La fonction approx_policy approxime le résultat de l'opération $(q_n \cdot \alpha_{SG} + (1 - q_n) \cdot (1 - \alpha_{SG}))$ par un élément $q_m$ de la séquence $(q_n)_{n \in \Gamma GFSE}$. C'est l'indice m de $q_m$ qui est stocké dans l'élément *predLUT(n)* de la table de consultation *predLUT.*

La fonction d'application du filtre bayésien binaire entier *IBBF$_{SG}$ ApplyFilter*$(n(s_{t-1}|w_{1:t-1})$, $n(s_t|w_t))$ est définie de la façon suivante :

> Prédiction: $n(s_t|w_{1:t-1}) \leftarrow predLUT(n(s_{t-1}|w_{1:t-1}))$
> Mise à jour de la mesure: $n(s_t|w_{1:t}) \leftarrow n(s_t|w_{1:t-1}) + n(s_t|w_t)$

Le procédé selon l'invention calcule, avantageusement l'indice de modèle inverse statique n(st|wt) de la façon suivante, illustré par la figure 5 (bloc « OG vers SIM ) :

$$n(s_t|w_t) = \begin{cases} g(w_t) > 0 & si \ n\big(o_{i,t-1}\big|z_{t-1}\big) > 0 \ \ et \ n\big(o_{i,t}\big|z_t\big) > 0 \\ 0 & sinon \end{cases}$$

Si la cellule est probablement occupée à la fois à l'instant $t$ - 1 et à l'instant $t$, la valeur de l'indice du modèle inverse statique est définie par la fonction g(wt) qui retourne un indice positif. Sinon, la valeur de l'indice du modèle inverse statique est égale à zéro.

$n(o_{i,t}|z_t)$ correspond à l'indice de probabilité dans la grille d'occupation de la cellule i : OGt(i) = $n(o_{i,t}|z_t)$

Selon un mode de réalisation, la fonction g(wt) renvoie une valeur constante $\beta_{SG}$ > 0.

En variante, on peut définir $g(n(w_t)) = max(n(o_{i,t-1}|z_{t-1}), n(o_{i,t}|z_t))$.

### Algorithme du filtre bayésien binaire entier de la grille d'espace libre $FG_t$

Le filtre bayésien binaire entier *IBBF$_{FG}$* de la grille d'espace libre *FGt* repose sur le même principe que le filtre bayésien binaire entier *IBBF$_{SG}$* de la grille d'espace statique $SG_t$.

La probabilité postérieure que la cellule soit libre à l'instant t $(P(f_t|w_{1:t}))$ est identifiée respectivement par un indice de probabilité n($f_t|w_{1:t}$) et le modèle inverse libre à l'instant t $(P(ft|wt))$ est identifié par un indice de modèle inverse libre n($f_t|w_t$).

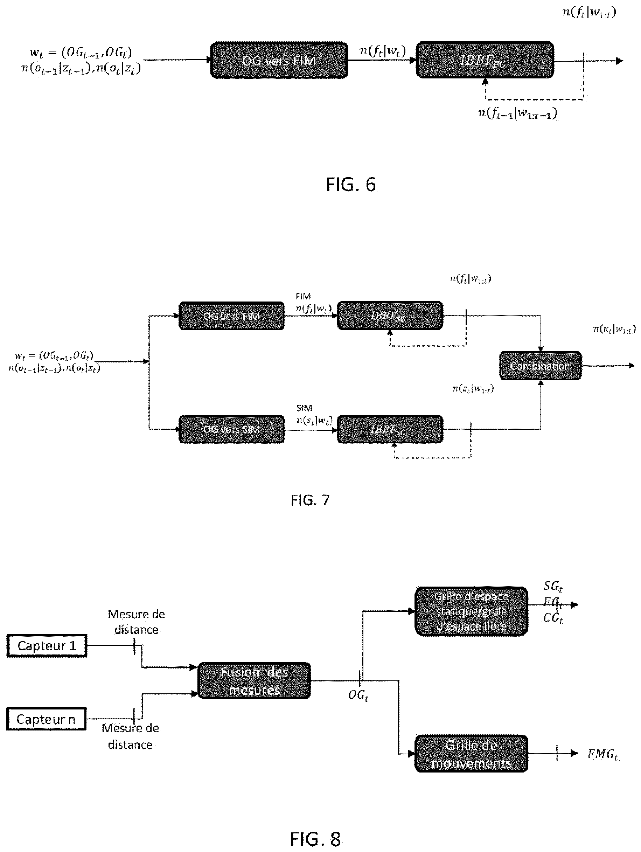

Comme l'illustre la figure 6, le filtre bayésien binaire entier *IBBF$_{FG}$* de la grille d'espace libre *FG$_t$* calcule l'indice de probabilité n($f_t|w_{1:t}$) de façon itérative, en fonction de l'indice de probabilité n($f_{t-1}|w_{1:t-1}$).

La fonction d'initialisation du filtre dépend des paramètres d'entrée suivants : $\varepsilon_{GFSE}$, $\Gamma_{GFSE}$ et $\alpha_{FG}$

La constante $\varepsilon_{GFSE}$ et l'ensemble d'indices $\Gamma_{GFSE}$ sont identiques à ceux utilisés pour le filtre bayésien binaire entier *IBBF$_{SG}$* de la grille d'espace statique $SG_t$.

$\alpha_{FG}$ est une constante, avec $\frac{1}{2} \leq \alpha_{FG} \leq 1$, et qui correspond à la valeur numérique du modèle de prédiction libre $P(f_t|f_{t-1})$.

Le détail des calculs exposé précédemment pour le filtre bayésien binaire entier *IBBF$_{SG}$* de la grille d'espace statique $SG_t$ s'applique, de la même façon, au filtre bayésien binaire entier *IBBF$_{FG}$* de la grille d'espace libre $FG_t$; il ne sont donc pas repris ici.

Les entrées de la fonction d'application du filtre *IBBF$_{FG}$* sont l'indice de probabilité n($f_{t-1}|w_{1:t-1}$) qui est calculé récursivement, avec rebouclage direct depuis la sortie du filtre, et l'indice de modèle inverse libre n($f_t|w_t$).

Avantageusement, l'indice de modèle inverse libre n($f_t|w_t$) est calculé de la façon suivante (bloc « OG vers FIM », figure 6) :

> Si la cellule est probablement libre à l'instant t à partir de la grille d'occupation à l'instant (OGt), la valeur de l'indice de modèle inverse libre est déterminée par la fonction $h(w_t)$ qui renvoie une valeur positive. L'indice du modèle inverse libre est égal à zéro dans les autres cas, c'est-à-dire :

$$n(f_t|w_t) = \begin{cases} h(w_t) > 0 & si \ n(o_{i,t}|z_t) < 0 \\ 0 & sinon \end{cases}$$

$n(o_{i,t}|z_t)$ correspond à l'indice de probabilité dans la grille d'occupation de la cellule i : $OG_t(i) = n(o_{i,t}|z_t)$

Selon un mode de réalisation, la fonction h(wt) renvoie une valeur constante $\beta_{FG} > 0$.

En variante, on peut définir $h(w_t) = -n(o_{i,t}|z_t)$

Ou encore, selon une autre variante :

$$n(f_t|w_t) = \begin{cases} \max\left(-n(o_{i,t-1}|z_{t-1}), -n(o_{i,t}|z_t)\right) & si \ n(o_{i,t-1}|z_{t-1}) < 0 \\ -n(o_{i,t}|z_t) \ sinon \end{cases}$$

La génération d'une grille combinée résultant de la combinaison de la grille d'espace statique $SG_t$ et de la grille d'espace libre *FGt* peut être implémentée en utilisant les filtres bayésiens binaires entiers, comme l'illustre la figure 7, la combinaison se faisant, dans ce cas, entre les indices de probabilité n($s_t$|$w_{1:t}$) et n($f_t$|$w_{1:t}$), de façon à obtenir un indice $n(\kappa_t|w_{1:t})$ pour chaque cellule de la grille combinée.

Dans ce cas, utilisant les filtres bayésiens binaires entiers, chaque cellule i de la grille combinée $CG_t$ peut être calculée par la fusion bayésienne suivante :

$$CG_t(i) \triangleq SG_t(i) - FG_t(i)$$

Ainsi, selon le signe de CGt(i) :

si CGt(i) > 0, la cellule i est probablement statique compte tenu de la séquence de paires de grilles d'occupation $w_{1:t}$

si CGt(i) < 0, la cellule est probablement libre,

si CGt(i) = 0, la cellule n'est ni libre ni statique.

Ainsi, on regarde l'estimation qui « l'emporte » entre l'estimation de la grille d'espace statique SGt et l'estimation de la grille d'espace libre FGt.

En variante, il est possible d'appliquer un critère de valeur maximale. Ainsi, chaque cellule i de la grille combinée $CG_t$ peut être calculée de la façon suivante :

$$CG_t(i) \triangleq \begin{cases} -FG_t(i) \ si \ FG_t(i) > SG_t(i) \\ 0 \ si \ FG_t(i) = SG_t(i) \\ SG_t(i) \ dans \ les \ autres \ cas \end{cases}$$

Grâce à l'utilisation de filtres bayésiens binaires entiers, l'estimation de mouvement peut être effectuée dans des microprocesseurs, par exemple avec des architectures de type ARM (marque déposée), alors que dans l'art antérieur, l'estimation est très gourmande en ressources informatiques, et nécessite habituellement des processeurs graphiques (ou GPU pour « Graphics Processing Unit »).

La figure 8 illustre la complémentarité entre le procédé selon l'invention et celui décrit dans la demande de brevet FR3116640. Une pluralité de capteurs (capteur 1, ..., capteur n). Les mesures sont fusionnées en mettant en œuvre le procédé tel que décrit dans la demande de brevet FR3041451, ce qui permet d'obtenir des grilles d'occupations OG (une probabilité d'occupation par cellule). Les grilles d'occupations peuvent être utilisées aussi bien pour générer les grilles d'espace statique et d'espace libre selon la présente invention, ou pour générer la grille de mouvement décrite dans la demande de brevet FR3116640. Néanmoins, les calculs pour aboutir à la grille de mouvement sont fondamentalement différents de ceux utilisés pour aboutir aux grilles d'espace statique et d'espace libre, comme indiqué précédemment.

Le procédé selon l'invention peut être mis en œuvre par au moins un capteur de distance, par exemple un LIDAR, un RADAR ou encore un SONAR, ou par une caméra apte à extraire des informations de distance à partir d'une scène acquise par le capteur.

Les grilles de caractéristiques sont établies à partir des mesures de distance effectuées par le capteur.

Le capteur peut être embarqué à bord d'un dispositif mobile, tel qu'un véhicule, en particulier un véhicule autonome, ou bien non autonome, et dans ce cas le procédé selon l'invention permet d'assister le conducteur pour la détection d'obstacles.

Le dispositif mobile peut également être tout dispositif apte à se mouvoir de façon autonome, par exemple un appareil domestique tel qu'un aspirateur autonome, ou encore un appareil de jardinage tel qu'une tondeuse à gazon autonome.

Le dispositif mobile comprend par ailleurs des actionneurs, aptes à corriger la trajectoire du dispositif mobile autonome en fonction de la caractérisation de l'environnement d'un dispositif mobile qui a été effectuée grâce au procédé selon l'invention.

L'invention a été essentiellement décrite en discrétisant l'ensemble des probabilités dans un ensemble de cardinalité finie, afin de ne pas avoir à effectuer des calculs utilisant l'arithmétique en virgule flottante. Cette disposition permet en particulier de d'implémenter le procédé selon l'invention dans un système embarqué, ayant de fortes contraintes d'intégration.

Le procédé selon l'invention pourrait également utiliser l'arithmétique en virgule flottante, en particulier si les capacités calculatoires du dispositif mettant en œuvre le procédé permettent d'effectuer la caractérisation de l'environnement en temps réel.

## Revendications

1. Procédé de caractérisation de l'environnement d'un dispositif mobile, dans lequel, pour chaque itération à un instant $t$, les étapes suivantes sont mises en œuvre :

S10) Acquisition d'une pluralité de mesures de distance ($z_t$) dans l'environnement par au moins un capteur ;
S20) Génération d'une paire ($w_t$) de grilles d'occupation à l'instant $t$ - 1 ($OG_{t-1}$) et à l'instant $t$ ($OGt$), chaque grille ($OG_{t-1}$, $OGt$) fusionnant les mesures de distance dans une représentation spatiale discrétisée de l'environnement ;

**caractérisé en ce que** les étapes suivantes sont mises en œuvre :

S30) Génération d'une grille d'espace statique à l'instant ($SG_t$), chaque cellule ($SG_t(i)$) de la grille d'espace statique à l'instant $t$ ayant une probabilité postérieure que ladite cellule soit occupée par un corps matériel statique à l'instant $t$ - 1 ($P(s_t|w_{1:t})$), ladite probabilité postérieure $P(s_t|w_{1:t})$ étant calculée pour chaque cellule ($SG_t(i)$) par un filtre bayésien binaire à partir :

- de la probabilité postérieure que ladite cellule soit occupée par un corps matériel statique à l'instant t-1 ($P(s_{t-1}|w_{1:t-1})$), ladite probabilité postérieure que ladite cellule soit occupée par un corps matériel statique à l'instant $t$ - 1 ($P(s_{t-1}|w_{1:t-1})$) étant directement injectée en entrée du filtre bayésien binaire ;
- d'un modèle de prédiction dit statique correspondant à une probabilité que la cellule soit occupée par un corps matériel statique à l'instant t en fonction de l'état de la cellule à l'instant $t$ - 1 ($P(s_t|s_{t-1})$) ; et
- d'un modèle inverse dit statique à l'instant $t$ ($P(s_t|w_t)$) correspondant à une probabilité de connaissance de l'occupation de la cellule par un corps matériel statique à l'instant $t$ à partir de la paire de grilles d'occupation à l'instant $t$ - 1 et à l'instant $t$ ;

et/ou
S40) Génération d'une grille d'espace libre à l'instant t ($FGt$), chaque cellule ($FG_t(i)$) de la grille d'espace libre à l'instant t ayant une probabilité postérieure que ladite cellule soit libre à l'instant $t$ $P(f_t|w_{1:t})$), ladite probabilité postérieure étant calculée pour chaque cellule par un filtre bayésien binaire à partir :

- de la probabilité postérieure que ladite cellule soit libre à l'instant t-1 ($P(f_{t-1}|w_{1:t-1})$), ladite probabilité postérieure que ladite cellule soit libre à l'instant $t$ - 1 ($P(f_{t-1}|w_{1:t-1})$) étant directement injectée en entrée du filtre bayésien binaire ;

- d'un modèle de prédiction dit libre correspondant à une probabilité que la cellule soit libre à l'instant $t$ en fonction de l'état de la cellule à l'instant $t$ - 1 ($P(f_t|f_{t-1})$) ; et
- d'un modèle inverse dit libre à l'instant $t$ ($P(f_t|w_t)$) correspondant à une probabilité de connaissance du fait que la cellule soit libre à l'instant t à partir de la paire de grilles d'occupation à l'instant $t$ - 1 et à l'instant $t$.

2. Procédé selon la revendication 1, dans lequel l'étape S30) de génération d'une grille d'espace statique et l'étape S40) de génération d'une grille d'espace libre sont mises en œuvre de façon concomitante.

3. Procédé selon la revendication 2, comprenant une étape S50) de génération d'une grille combinée *(CGt)* résultant de la combinaison de la grille d'espace statique ($SG_t$) et de la grille d'espace libre *(FGt)*.

4. Procédé selon la revendication 3, dans lequel chaque cellule i de la grille combinée *(CGt)* est calculée par la fusion bayésienne suivante :

$$CG_t(i) \triangleq F(SG_t(i), 1 - FG_t(i))$$

Dans lequel F(,) est la fonction de fusion bayésienne, $CG_t(i)$ correspond à une cellule i de la grille combinée à l'instant $t$, $SG_t(i)$ correspond à une cellule *i* de la grille d'espace statique à l'instant $t$, et $FG_t(i)$ correspond à une cellule i de la grille d'espace libre à l'instant $t$,
Et selon la valeur de $CG_t(i)$:

- si $CG_t(i) > 1/2$, la cellule i est probablement statique compte tenu de la séquence de paires de grilles d'occupation ($w_{1:t}$)
- si $CG_t(i) < 1/2$, la cellule est probablement libre,
- si $CG_t(i) = 1/2$, la cellule n'est ni libre ni statique.

5. Procédé selon l'une des revendications 1 à 3, dans lequel :

- la probabilité postérieure que la cellule soit occupée par un corps matériel statique à l'instant $t$ ($P(s_t|w_{1:t})$) et le modèle inverse statique à l'instant $t$ ($P(s_t|w_t)$) sont approximés par des valeurs appartenant à un ensemble de cardinalité finie, les valeurs étant identifiées respectivement par un indice de probabilité n($s_t|w_{1:t}$) et par un indice de modèle inverse statique n($s_t|w_t$);
- la probabilité postérieure que la cellule soit libre à l'instant $t$ ($P(f_t|w_{1:t})$) et le modèle inverse libre à l'instant $t$ ($P(f_t|w_t)$) sont approximés par des valeurs appartenant à un ensemble de cardinalité finie, les valeurs étant identifiées respectivement par un indice de probabilité n($f_t|w_{1:t}$) et par un indice de modèle inverse libre n($f_t|w_t$).

6. Procédé selon la revendication 5, dans lequel l'indice de modèle inverse statique n($s_t|w_t$)est calculé de la façon suivante :

$$n(s_t|w_t) = \begin{cases} g(w_t) > 0 & si \ n\big(o_{i,t-1}\big|z_{t-1}\big) > 0 \ \ et \ n\big(o_{i,t}\big|z_t\big) > 0 \\ \quad\quad 0 & sinon \end{cases}$$

La fonction $g(w_t)$ renvoyant une valeur positive, $n(o_{i,t-1}|z_{t-1})$ correspondant à l'indice d'occupation de la cellule i de la grille d'occupation $OG_{t-1}$ à l'instant $t$ - 1, et $n(o_{i,t}|z_t)$ correspondant à l'indice d'occupation de la cellule i de la grille d'occupation $OG_t$ à l'instant $t$.

7. Procédé selon l'une des revendications 5 ou 6, dans lequel l'indice de modèle inverse libre n($f_t|w_t$) est calculé de la façon suivante :

$$n(f_t|w_t) = \begin{cases} h(w_t) > 0 & si \ n\big(o_{i,t}\big|z_t\big) < 0 \\ \quad\quad 0 & sinon \end{cases}$$

et $n(o_{i,t}|z_t)$ correspondant à l'indice d'occupation de la cellule i de la grille d'occupation $OG_t$ à l'instant $t$, la fonction $h(w_t)$ renvoyant une valeur positive.

**8.** Procédé selon les revendications 6 et 7, dans lequel la valeur positive de la fonction g(wt) et la valeur positive de la fonction h($w_t$) sont des valeurs constantes ($\beta_{SG}$, $\beta_{FG}$).

**9.** Procédé selon la revendication 6, dans lequel la valeur positive renvoyée par la fonction g(wt) est égale à max($n(o_{i,t-1}|z_{t-1})$, $n(o_{i,t}z_t)$).

**10.** Procédé selon la revendication 7, dans lequel la valeur positive renvoyée par la fonction $h(w_t)$ est égale à - n($o_{i,t}|z_t$).

**11.** Procédé selon l'une des revendications 5 ou 6, dans lequel l'indice de modèle inverse libre n($f_t|w_t$) est calculé de la façon suivante :

$$n(f_t|w_t) = \begin{cases} \max\left(-n(o_{i,t-1}|z_{t-1}), -n(o_{i,t}|z_t)\right) & \text{si } n(o_{i,t-1}|z_{t-1}) < 0 \\ -n(o_{i,t}|z_t) \, sinon \end{cases}$$

$n(o_{i,t}|z_t)$ correspondant à l'indice d'occupation de la cellule i de la grille d'occupation $OG_t$ à l'instant $t$, et $n(o_{i,t-1}|z_{t-1})$ correspondant à l'indice d'occupation de la cellule i de la grille d'occupation $OG_{t-1}$ à l'instant $t$ - 1.

**12.** Procédé selon l'une des revendications 5 à 11, dans lequel l'indice n($s_t|w_{1:t-1}$) correspondant à la composante de prédiction du filtre bayésien binaire de la grille d'espace statique est obtenu à l'aide d'une table de consultation comprenant un ensemble fini d'indices de probabilités, et l'indice filtré n($s_t|w_{1:t}$) est obtenu par addition d'indices entiers de probabilités, et dans lequel l'indice n($f_t|w_{1:t-1}$) correspondant à la composante de prédiction du filtre bayésien binaire de la grille d'espace libre est obtenu à l'aide d'une table de consultation comprenant un ensemble fini d'indices de probabilités, et l'indice filtré n($f_t|w_{1:t}$) est obtenu par addition d'indices entiers de probabilités.

**13.** Procédé selon l'une des revendications 5 à 12 en combinaison avec la revendication 3, dans lequel chaque cellule *i* de la grille combinée *(CGt)* est calculée par la fusion bayésienne suivante :

$$CG_t(i) \triangleq SG_t(i), 1 - FG_t(i)$$

$CG_t(i)$ correspond à une cellule i de la grille combinée à l'instant $t$, $SG_t(i)$ correspond à une cellule *i* de la grille d'espace statique à l'instant $t$, et $FG_t(i)$ correspond à une cellule *i* de la grille d'espace libre à l'instant t,
Et selon la valeur de *CGt(i)* :

- si *CGt(i)* > 0 la cellule *i* est probablement statique compte tenu de la séquence de paires de grilles d'occupation ($w_{1:t}$)
- si *CGt(i)* < 0, la cellule est probablement libre,
- si $CG_t(i)$ = 0, la cellule n'est ni libre ni statique.

**14.** Procédé d'évitement d'un corps matériel en mouvement autour d'un dispositif mobile, **caractérisé en ce qu'**il met en œuvre le procédé selon l'une des revendications 1 à 13 pour caractériser l'environnement d'un dispositif mobile, et qu'il envoie une commande à un actionneur du dispositif mobile afin d'éviter ledit corps matériel.

**15.** Dispositif de caractérisation de l'environnement d'un dispositif mobile, le dispositif de caractérisation comprenant:

- au moins un port d'entrée pour recevoir une pluralité de signaux représentatifs d'une série temporelle de mesures de distance issues d'un ou plusieurs capteurs de distance, et
- un processeur de données configuré pour recevoir en entrée lesdits signaux, pour générer une grille d'espace libre ou une grille d'espace statique à partir desdits signaux en appliquant un procédé selon l'une des revendications 1 à 14.

**Patentansprüche**

**1.** Verfahren zum Charakterisieren der Umgebung einer mobilen Vorrichtung, wobei für jede Iteration zu einem Zeitpunkt t die folgenden Schritte durchgeführt werden:

S10) Erfassen einer Vielzahl von Distanzmessungen ($z_t$) in der Umgebung durch mindestens einen Sensor;
S20) Erzeugen eines Paares ($w_t$) von Belegungsgittern zum Zeitpunkt $t$ - 1 ($OG_{t-1}$) und zum Zeitpunkt $t$ ($OGt$), wobei jedes Gitter ($OG_{t-1}$, $OGt$) die Distanzmessungen in einer diskretisierten räumlichen Darstellung der Umgebung fusioniert;

**dadurch gekennzeichnet, dass** die folgenden Schritte durchgeführt werden:

S30) Erzeugen eines statischen Raumgitters zum Zeitpunkt $t$ ($SG_t$), wobei jede Zelle ($SG_t(i)$) des statischen Raumgitters zum Zeitpunkt $t$ *eine* A-posteriori-Wahrscheinlichkeit aufweist, dass die Zelle zum Zeitpunkt $t$ - 1 von einem statischen materiellen Körper belegt ist ($P(s_t|w_{1:t})$), wobei die A-posteriori-Wahrscheinlichkeit $P(s_t|w_{1:t})$ für jede Zelle ($SG_t(i)$) durch ein binäres Bayessches Filter anhand von Folgendem berechnet wird:

- der A-posteriori-Wahrscheinlichkeit, dass die Zelle zum Zeitpunkt $t$ - 1 von einem statischen materiellen Körper belegt ist ($P(s_{t-1}|w_{1:t-1})$), wobei die A-posteriori-Wahrscheinlichkeit, dass die Zelle zum Zeitpunkt t - 1 von einem statischen materiellen Körper belegt ist ($P(s_{t-1}|w_{1:t-1})$), direkt am Eingang des binären Bayesschen Filters eingespeist wird;
- einem als statisch bezeichneten Vorhersagemodell entsprechend einer Wahrscheinlichkeit, dass die Zelle zum Zeitpunkt $t$ von einem statischen materiellen Körper belegt ist, in Abhängigkeit vom Zustand der Zelle zum Zeitpunkt $t$ - 1 ($P(s_t|s_{t-1})$); und
- einem als statisch bezeichneten inversen Modell zum Zeitpunkt $t$ ($P(s_t|w_t)$) entsprechend einer Wissenswahrscheinlichkeit der Belegung der Zelle durch einen statischen materiellen Körper zum Zeitpunkt $t$ anhand des Paares von Belegungsgittern zum Zeitpunkt $t$ - 1 und zum Zeitpunkt $t$;

und/oder
S40) Erzeugen eines freien Raumgitters zum Zeitpunkt $t$ *(FGt)*, wobei jede Zelle *(FGt(i))* des freien Raumgitters zum Zeitpunkt $t$ *eine* A-posteriori-Wahrscheinlichkeit aufweist, dass die Zelle zum Zeitpunkt $t$ frei ist $P(f_t|w_{1:t})$), wobei die A-posteriori-Wahrscheinlichkeit für jede Zelle durch ein binäres Bayessches Filter anhand von Folgendem berechnet wird:

- der A-posteriori-Wahrscheinlichkeit, dass die Zelle zum Zeitpunkt $t$ - 1 frei ist ($P(f_{t-1}|w_{1:t-1})$), wobei die A-posteriori-Wahrscheinlichkeit, dass die Zelle zum Zeitpunkt $t$ - 1 frei ist ($P(f_{t-1}|w_{1:t-1})$), direkt am Eingang des binären Bayesschen Filters eingespeist wird;
- einem als frei bezeichneten Vorhersagemodell entsprechend einer Wahrscheinlichkeit, dass die Zelle zum Zeitpunkt t frei ist, in Abhängigkeit vom Zustand der Zelle zum Zeitpunkt $t$ - *1* ($P(f_t|f_{t-1})$); und
- einem als frei bezeichneten inversen Modell zum Zeitpunkt $t$ ($P(f_t|w_t)$) entsprechend einer Wissenswahrscheinlichkeit, dass die Zelle zum Zeitpunkt $t$ frei ist, anhand des Paares von Belegungsgittern zum Zeitpunkt $t$ - 1 und zum Zeitpunkt $t$.

2. Verfahren nach Anspruch 1, wobei der Schritt S30) zum Erzeugen eines statischen Raumgitters und der Schritt S40) zum Erzeugen eines freien Raumgitters gleichzeitig durchgeführt werden.

3. Verfahren nach Anspruch 2, umfassend einen Schritt S50) zum Erzeugen eines kombinierten Gitters *(CGt)*, das sich aus der Kombination des statischen Raumgitters ($SG_t$) und des freien Raumgitters *(FGt)* ergibt.

4. Verfahren nach Anspruch 3, wobei jede Zelle i des kombinierten Gitters *(CGt)* durch die folgende Bayessche Fusion berechnet wird:

$$CG_t(i) \triangleq F\big(SG_t(i), 1 - FG_t(i)\big)$$

wobei F(,) die Bayessche Fusionsfunktion ist, $CG_t(i)$ einer Zelle i des kombinierten Gitters zum Zeitpunkt $t$ entspricht, $SG_t(i)$ einer Zelle i des statischen Raumgitters zum Zeitpunkt $t$ entspricht, und $FG_t(i)$ einer Zelle i des freien Raumgitters zum Zeitpunkt t entspricht,
und gemäß dem Wert von $CG_t(i)$:

- wenn $CG_t(i)$ > 1/2, die Zelle i unter Berücksichtigung der Sequenz von Paaren von Belegungsgittern ($w_{1:t}$) wahrscheinlich statisch ist,
- wenn $CG_t(i)$ < 1/2, die Zelle wahrscheinlich frei ist,

- wenn *CGt(i)* = 1/2, die Zelle weder frei noch statisch ist.

5. Verfahren nach einem der Ansprüche 1 bis 3, wobei:

   - die A-posteriori-Wahrscheinlichkeit, dass die Zelle zum Zeitpunkt t von einem statischen materiellen Körper belegt ist ($P(s_t|w_{1:t})$), und das statische inverse Modell zum Zeitpunkt $t$ ($P(s_t|w_t)$) durch Werte angenähert werden, die zu einer Menge von endlicher Kardinalität gehören, wobei die Werte jeweils durch einen Wahrscheinlichkeitsindex n($s_t|w_{1:t}$) und durch einen Index des statischen inversen Modells n($s_t|w_t$) identifiziert werden;
   - die A-posteriori-Wahrscheinlichkeit, dass die Zelle zum Zeitpunkt t frei ist ($P(f_t|w_{1:t})$), und das freie inverse Modell zum Zeitpunkt $t$ ($P(f_t|w_t)$) durch Werte angenähert werden, die zu einer Menge von endlicher Kardinalität gehören, wobei die Werte jeweils durch einen Wahrscheinlichkeitsindex n($f_t|w_{1:t}$) und durch einen Index des freien inversen Modells n($f_t|w_t$) identifiziert werden.

6. Verfahren nach Anspruch 5, wobei der Index des statischen inversen Modells n($s_t|w_t$) auf folgende Weise berechnet wird:

$$n(s_t|w_t) = \begin{cases} g(w_t) > 0 \ wenn \ n\big(o_{i,t-1}\big|z_{t-1}\big) > 0 \ und \ n\big(o_{i,t}\big|z_t\big) > 0 \\ 0 \ wenn \ nicht \end{cases}$$

wobei die Funktion $g(w_t)$ einen positiven Wert zurückgibt, $n(o_{i,t-1}|z_{t-1})$ dem Belegungsindex der Zelle i des Belegungsgitters $OG_{t-1}$ zum Zeitpunkt $t$ - 1 entspricht, und $n(o_{i,t}|z_t)$ dem Belegungsindex der Zelle i des Belegungsgitters $OG_t$ zum Zeitpunkt $t$ entspricht.

7. Verfahren nach einem der Ansprüche 5 oder 6, wobei der Index des freien inversen Modells n($f_t|w_t$) auf folgende Weise berechnet wird:

$$n(f_t|w_t) = \begin{cases} h(w_t) > 0 \ \ wenn \ n\big(o_{i,t}\big|z_t\big) < 0 \\ 0 \ \ \ \ \ wenn \ nicht \end{cases}$$

und $n(o_{i,t}|z_t)$ dem Belegungsindex der Zelle i des Belegungsgitters $OG_t$ zum Zeitpunkt $t$ entspricht, wobei die Funktion $h(w_t)$ einen positiven Wert zurückgibt.

8. Verfahren nach Ansprüchen 6 und 7, wobei der positive Wert der Funktion g($w_t$) und der positive Wert der Funktion h(wt) konstante Werte ($\beta_{SG}$, $\beta_{FG}$) sind.

9. Verfahren nach Anspruch 6, wobei der von der Funktion g(wt) zurückgegebene positive Wert gleich max($n(o_{i,t-1}|z_{t-1})$, $n(o_{i,t}|z_t)$) ist.

10. Verfahren nach Anspruch 7, wobei der von der Funktion $h(w_t)$ zurückgegebene positive Wert gleich - n($o_{i,t}|z_t$) ist.

11. Verfahren nach einem der Ansprüche 5 oder 6, wobei der Index des freien inversen Modells n($f_t|w_t$) auf folgende Weise berechnet wird:

$$n(f_t|w_t) = \begin{cases} \max\big(-n\big(o_{i,t-1}\big|z_{t-1}\big), -n\big(o_{i,t}\big|z_t\big)\big) \ \ wenn \ n\big(o_{i,t-1}\big|z_{t-1}\big) < 0 \\ -n\big(o_{i,t}\big|z_t\big) \ wenn \ nicht \end{cases}$$

wobei n($o_{i,t}|z_t$) dem Belegungsindex der Zelle i des Belegungsgitters $OG_t$ zum Zeitpunkt $t$ entspricht, und $n(o_{i,t-1}|z_{t-1})$ dem Belegungsindex der Zelle i des Belegungsgitters $OG_{t-1}$ zum Zeitpunkt $t$ - 1 entspricht.

12. Verfahren nach einem der Ansprüche 5 bis 11, wobei der Index n($s_t|w_{1:t-1}$), der der Vorhersagekomponente des binären Bayesschen Filters des statischen Raumgitters entspricht, unter Verwendung einer Nachschlagetabelle erhalten wird, die eine endliche Menge von Wahrscheinlichkeitsindizes umfasst, und der gefilterte Index n($s_t|w_{1:t}$) durch Addition von ganzen Wahrscheinlichkeitsindizes erhalten wird, und wobei der Index n($f_t|w_{1:t-1}$), der der Vorhersagekomponente des binären Bayesschen Filters des freien Raumgitters entspricht, unter Verwendung einer Nachschlagetabelle erhalten wird, die eine endliche Menge von Wahrscheinlichkeitsindizes umfasst, und der gefilterte Index $n(f_t|w_{1:t})$ durch Addition von ganzen Wahrscheinlichkeitsindizes erhalten wird.

**13.** Verfahren nach einem der Ansprüche 5 bis 12 in Kombination mit Anspruch 3, wobei jede Zelle i des kombinierten Gitters *(CGt)* durch die folgende Bayessche Fusion berechnet wird:

$$CG_t(i) \triangleq SG_t(i), 1 - FG_t(i)$$

$CG_t(i)$ einer Zelle i des kombinierten Gitters zum Zeitpunkt $t$ entspricht, $SG_t(i)$ einer Zelle i des statischen Raumgitters zum Zeitpunkt $t$ entspricht, und $FG_t(i)$ einer Zelle i des freien Raumgitters zum Zeitpunkt t entspricht, und gemäß dem Wert von $CG_t(i)$:

- wenn $CG_t(i) > 0$, die Zelle i unter Berücksichtigung der Sequenz von Paaren von Belegungsgittern ($w_{1:t}$) wahrscheinlich statisch ist,
- wenn $CG_t(i) < 0$, die Zelle wahrscheinlich frei ist,
- wenn $CG_t(i) = 0$, die Zelle weder frei noch statisch ist.

**14.** Verfahren zum Umgehen eines materiellen Körpers, der sich um eine mobile Vorrichtung bewegt, **dadurch gekennzeichnet, dass** es das Verfahren nach einem der Ansprüche 1 bis 13 durchführt, um die Umgebung einer mobilen Vorrichtung zu charakterisieren, und dass es einen Befehl an eine Betätigungseinrichtung der mobilen Vorrichtung sendet, um den materiellen Körper zu umgehen.

**15.** Vorrichtung zum Charakterisieren der Umgebung einer mobilen Vorrichtung, wobei die Charakterisierungsvorrichtung Folgendes umfasst:

- mindestens einen Eingangsanschluss zum Empfangen einer Vielzahl von Signalen, die für eine zeitliche Reihe von Distanzmessungen stehen, die aus einem oder mehreren Distanzsensoren ausgegeben werden, und
- einen Datenprozessor, der dafür konfiguriert ist, am Eingang die Signale zu empfangen, um ein freies Raumgitter oder ein statisches Raumgitter anhand der Signale zu erzeugen, indem er ein Verfahren nach einem der Ansprüche 1 bis 14 anwendet.

## Claims

**1.** A method for characterising the environment of a mobile device, wherein, for each iteration at a time t, the following steps are implemented:

S10) acquiring a plurality of distance measurements ($z_t$) in the environment by way of at least one sensor;
S20) generating a pair ($w_t$) of occupancy grids at the time $t - 1$ ($OG_{t-1}$) and at the time $t$ ($OG_t$), each grid ($OG_{t-1}$, OGt) fusing the distance measurements into a discretised spatial representation of the environment;

**characterised in that** the following steps are implemented:

S30) generating a static space grid at the time $t$ ($SG_t$), each cell ($SG_t(i)$) of the static space grid at the time t having a posterior probability of said cell being occupied by a static tangible body at the time $t - 1$ ($P(s_t|w_{1:t})$), said posterior probability $P(s_t|w_{1:t})$) being computed for each cell ($SG_t(i)$) by way of a binary Bayesian filter from:

- the posterior probability of said cell being occupied by a static tangible body at the time $t - 1$ ($P(s_{t-1}|w_{1:t-1})$), said posterior probability of said cell being occupied by a static tangible body at the time $t - 1$ ($P(s_{t-1}|w_{1:t-1})$) being injected directly at input of the binary Bayesian filter;
- what is referred to as a static prediction model corresponding to a probability of the cell being occupied by a static tangible body at the time $t$ as a function of the state of the cell at the time $t - 1$ ($P(s_t|s_{t-1})$); and
- what is referred to as a static inverse model at the time $t$ ($P(s_t|w_t)$) corresponding to a probability of knowing that the cell is occupied by a static tangible body at the time $t$ from the pair of occupancy grids at the time $t - 1$ and at the time $t$;

and/or

S40) Generating a free space grid at the time t ($FG_t$), each cell ($FG_t(i)$) of the free space grid at the time t having a posterior probability of said cell being free at the time $t$ $P(f_t|w_{1:t})$), said posterior probability being computed for each cell by way of a binary Bayesian filter from:

- the posterior probability of said cell being free at the time $t$ - 1 ($P(f_{t-1}|w_{1:t-1})$), said posterior probability of said cell being free at the time $t$ - 1 ($P(f_{t-1}|w_{1:t-1})$) being injected directly at input of the binary Bayesian filter;
- what is referred to as a free prediction model corresponding to a probability of the cell being free at the time $t$ as a function of the state of the cell at the time $t$ - 1 ($P(f_t|f_{t-1})$); and
- what is referred to as a free inverse model at the time $t$ ($P(f_t|w_t)$) corresponding to a probability of knowing that the cell is free at the time $t$ from the pair of occupancy grids at the time $t$ - 1 and at the time $t$.

2. The method according to claim 1, wherein step S30) of generating a static space grid and step S40) of generating a free space grid are implemented concomitantly.

3. The method according to claim 2, comprising a step S50) of generating a combined grid ($CG_t$) resulting from the combination of the static space grid ($SG_t$) and the free space grid ($FGt$).

4. The method according to claim 3, wherein each cell i of the combined grid ($CG_t$) is computed by way of the following Bayesian fusion:

$$CG_t(i) \triangleq F(SG_t(i), 1 - FG_t(i))$$

wherein $F(,)$ is the Bayesian fusion function, $CG_t(i)$ corresponds to a cell i of the combined grid at the time $t$, $SG_t(i)$ corresponds to a cell i of the static space grid at the time $t$, and $FGt(i)$ corresponds to a cell i of the free space grid at the time $t$,
and according to the value of $CG_t(i)$:

- if $CGt(i) > 1/2$, the cell i is probably static given the sequence of pairs of occupancy grids ($w_{1:t}$)
- if $CGt(i) < 1/2$, the cell is probably free,
- if $CGt(i) = 1/2$, the cell is neither free nor static.

5. The method according to one of claims 1 to 3, wherein:

- the posterior probability of the cell being occupied by a static tangible body at the time $t$ ($P(s_t|w_{1:t})$) and the static inverse model at the time $t$ ($P(s_t|w_t)$) are approximated by values belonging to a set of finite cardinality, the values being identified respectively by a probability index $n(s_t|w_{1:t})$ and by a static inverse model index $n(s_t|w_t)$;
- the posterior probability of the cell being free at the time $t$ ($P(f_t|w_{1:t})$) and the free inverse model at the time $t$ ($P(f_t|w_t)$) are approximated by values belonging to a set of finite cardinality, the values being identified respectively by a probability index $n(f_t|w_{1:t})$ and by a free inverse model index $n(f_t|w_t)$.

6. The method according to claim 5, wherein the static inverse model index $n(s_t|w_t)$ is computed as follows:

$$n(s_t|w_t) = \begin{cases} g(w_t) > 0 & if \ n\big(o_{i,t-1}\big|z_{t-1}\big) > 0 \ and \ n\big(o_{i,t}\big|z_t\big) > 0 \\ 0 & otherwise \end{cases}$$

the function $g(w_t)$ returning a positive value, $n(o_{i,t-1}|z_{t-1})$ corresponding to the occupancy index of the cell i of the occupancy grid $OG_{t-1}$ at the time $t$ - 1, and $n(o_{i,t}|z_t)$ corresponding to the occupancy index of the cell i of the occupancy grid $OG_t$ at the time $t$.

7. The method according to one of claim 5 or 6, wherein the free inverse model index $n(f_t|w_t)$ is computed as follows:

$$n(f_t|w_t) = \begin{cases} h(w_t) > 0 & if \ n\big(o_{i,t}\big|z_t\big) < 0 \\ 0 & otherwise \end{cases}$$

and $n(o_{i,t}|z_t)$ corresponding to the occupancy index of the cell i of the occupancy grid $OG_t$ at the time $t$, the function $h(w_t)$ returning a positive value.

8. The method according to claims 6 and 7, wherein the positive value of the function g(wt) and the positive value of the function h(wt) are constant values ($\beta_{SG}$, $\beta_{FG}$).

9. The method according to claim 6, wherein the positive value returned by the function g(wt) is equal to max($n(o_{i,t-1}|z_{t-1})$, $n(o_{i,t}|z_t)$).

10. The method according to claim 7, wherein the positive value returned by the function $h(w_t)$ is equal to - n($o_{i,t}|z_t$).

11. The method according to one of claim 5 or 6, wherein the free inverse model index n($f_t|w_t$) is computed as follows:

$$n(f_t|w_t) = \begin{cases} \max\left(-n\left(o_{i,t-1}\middle|z_{t-1}\right), -n\left(o_{i,t}\middle|z_t\right)\right) & \text{if } n\left(o_{i,t-1}\middle|z_{t-1}\right) < 0 \\ -n\left(o_{i,t}\middle|z_t\right) \text{ otherwise} \end{cases}$$

$n(o_{i,t}|z_t)$ corresponding to the occupancy index of the cell i of the occupancy grid $OG_t$ at the time $t$, and $n(o_{i,t-1}|z_{t-1})$ corresponding to the occupancy index of the cell i of the occupancy grid $OG_{t-1}$ at the time $t$ - 1.

12. The method according to one of claims 5 to 11, wherein the index n($s_t|w_{1:t-1}$) corresponding to the prediction component of the binary Bayesian filter of the static space grid is obtained using a look-up table comprising a finite set of probability indices, and the filtered index n($s_t|w_{1:t}$) is obtained by adding integer probability indices, and wherein the index n($f_t|w_{1:t-1}$) corresponding to the prediction component of the binary Bayesian filter of the free space grid is obtained using a look-up table comprising a finite set of probability indices, and the filtered index n($f_t|w_{1:t}$) is obtained by adding integer probability indices.

13. The method according to one of claims 5 to 12 in combination with claim 3, wherein each cell i of the combined grid ($CG_t$) is computed by way of the following Bayesian fusion:

$$CG_t(i) \triangleq SG_t(i), 1 - FG_t(i)$$

$CG_t(i)$ corresponds to a cell i of the combined grid at the time $t$, $SG_t(i)$ corresponds to a cell i of the static space grid at the time $t$, and $FG_t(i)$ corresponds to a cell i of the free space grid at the time t,
and according to the value of $CG_t(i)$ :

- if $CGt(i)$ > 0 the cell i is probably static given the sequence of pairs of occupancy grids ($w_{1:t}$),
- if $CGt(i)$ < 0, the cell is probably free,
- if $CGt(i)$ = 0, the cell is neither free nor static.

14. A method for avoiding a tangible body moving around a mobile device, **characterised in that** it implements the method according to one of claims 1 to 13 to characterise the environment of a mobile device, and **in that** it sends a command to an actuator of the mobile device in order to avoid said tangible body.

15. A device for characterising the environment of a mobile device, the characterisation device comprising:

- at least one input port for receiving a plurality of signals representative of a time series of distance measurements from one or more distance sensors, and
- a data processor configured to receive said signals at input, to generate a free space grid or a static space grid from said signals by applying a method according to one of claims 1 to 14.

FIG. 1

FIG. 2

Indice de Modèle Inverse
@ t

Modèle de Prediction
Constant

$n(s_t|w_t)$

Indice de Probabilité
postérieure @ t-1

$\alpha$

Indice de Probabilité
postérieure @ t

$n(s_{t-1}|w_{1:t-1})$ → Prédiction → $n(s_t|w_{1:t-1})$ → Mise à jour de la mesure → $n(s_t|w_{1:t})$

FIG. 3

Indice de Modèle Inverse
@ t

Indice de Probabilité
postérieure @ t-1

$n(s_t|w_t)$

Indice de Probabilité
postérieure @ t

$n(s_{t-1}|w_{1:t-1})$ →

Équations de
prédiction et
mise à jour IBBF

→ $n(s_t|w_{1:t})$

FIG. 4

$w_t = (OG_{t-1}, OG_t)$
$n(o_{t-1}|z_{t-1}), n(o_t|z_t)$ →

OG vers SIM

$n(s_t|w_t)$

$IBBF_{SG}$

$n(s_t|w_{1:t})$

$n(s_{t-1}|w_{1:t-1})$

FIG. 5

$$n(f_t|w_{1:t})$$

$$w_t = (OG_{t-1}, OG_t)$$
$$n(o_{t-1}|z_{t-1}), n(o_t|z_t)$$

OG vers FIM

$$n(f_t|w_t)$$

$$IBBF_{FG}$$

$$n(f_{t-1}|w_{1:t-1})$$

FIG. 6

$$n(f_t|w_{1:t})$$

$$w_t = (OG_{t-1}, OG_t)$$
$$n(o_{t-1}|z_{t-1}), n(o_t|z_t)$$

OG vers FIM

FIM
$$n(f_t|w_t)$$

$$IBBF_{SG}$$

OG vers SIM

SIM
$$n(s_t|w_t)$$

$$IBBF_{SG}$$

$$n(s_t|w_{1:t})$$

Combination

$$n(\kappa_t|w_{1:t})$$

FIG. 7

Capteur 1

Mesure de distance

Capteur n

Mesure de distance

Fusion des mesures

$$OG_t$$

Grille d'espace statique/grille d'espace libre

$$SG_t$$
$$EG_t$$
$$CG_t$$

Grille de mouvements

$$FMG_t$$

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3041451
- US 20120131823 A1

- FR 3116640

**Littérature non-brevet citée dans la description**

- **H.P. MORAVEC** ; **A. ELFES**. High resolution maps from wide angle sonar. *Proceedings. IEEE ICRA*, March 1985, vol. 2, 116-121

- **NUSS, D.** ; **REUTER, S.** ; **THOM, M.** ; **YUAN, T.** ; **KREHL, G.** ; **MAILE, M.** ; **DIETMAYER, K.** A random finite set approach for dynamic occupancy grid maps with real-time application. *The International Journal of Robotics Research*, 2018, vol. 37 (8), 841-866
- **COUE**. *Bayesian Occupancy Filtering for Multitarget Tracking: an Automotive Application*